# EUROPEAN PATENT APPLICATION

(11) **EP 4 513 306 A1**
(43) Date of publication of application: **26.02.2025**
(21) Application number: 23306416.1
(22) Date of filing: 25.08.2023
(51) Int. Cl.: G06F 3/01, G06F 3/0481, G06F 3/14, G06V 30/00, G09G 5/32

(54) **SIGNALING IMAGE HORIZON DATA**

(71) Applicant: Beijing Xiaomi Mobile Software Co., Ltd., Beijing 100085 (CN)
(72) Inventor: THOMAS, EMMANUEL, 2611WD Delft (NL); Potetsianakis, Emmanouil, 2563 TZ The Hague (NL)
(74) Representative: RVDB Rennes

(57) **Abstract**

The present disclosure relates to a method and apparatus of signaling encapsulated data representing image samples of at least one image. The method comprises:
- writing (110) the image samples as encapsulated data ; and
- writing (120) at least one image horizon data as encapsulated data, each image horizon data being representative of a horizon line of one of the at least one image.

## Description

### FIELD

The present disclosure generally relates to signaling relative to a still image or video frame of a video. Particularly, but not exclusively, the present disclosure concerns signaling encapsulated data representing video frames or still images and image horizon data used to rotate said video frames or still images to align the image horizon data with a target alignment direction before playing back.

### BACKGROUND

Leading lines are a compositional technique where human-made or natural lines lead the viewer's eyes through a photograph to the subject or the heart of the image (https://www.adobe.com/creativecloud/photography/discover/leading-lines-photography.html). Leading lines can be very noticeable, or they can be quite subtle. They can help photographers direct the focus of the photo, create balance, and tell a story with an image. There exist several types of leading lines but one of the most common, especially for landscape images, is the horizontal line defined by the horizon. Horizontal leading lines are mostly used in landscape photography. You can have a path or a dirt road leading to a straight river or a fallen tree. They convey a sense of stability. They're ongoing, and you can rely on them. But be careful about horizontal lines leading the viewer's attention completely off the page, unless that's your intention. It is thus important for photographers to align the horizontal with the horizontal direction of an image/video. Not doing so can lead to a degraded viewer's experience, and in some cases sickness since the viewer would see a tilted horizon while the body doesn't sense a tilted position with respect to gravity.

As a result, camera manufacturers have for a long time offered features for assisting in capturing images/video with the horizon appearing levelled.

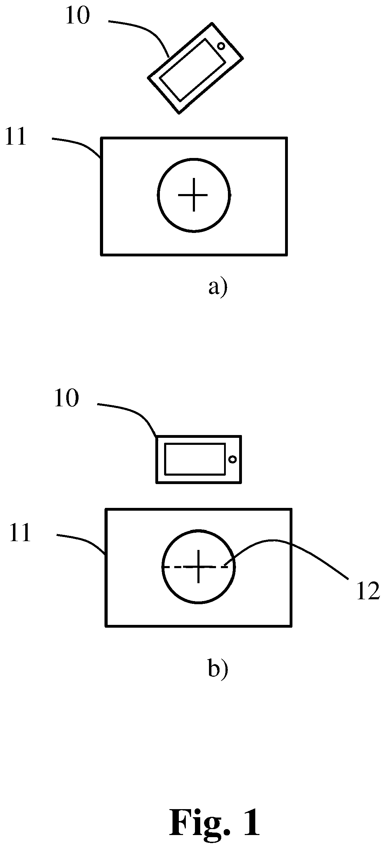

For example, in **Figure 1****,** an overlay feature called "Virtual Horizon" helps the user to align the horizon in a visual content 11 captured by a tilted device 10 (Figure 1 a), with a horizontal direction 12 of the image/video (Figure 1 b)). In other words, this feature acts as a level, e.g. a spirit level which is an instrument designed to indicate whether a surface is horizontal (level) or vertical (plumb) ("Spirit level," https://en.wikipedia.org/w/index.php?title=Spirit_level&oldid=11416503 81 (accessed March 7, 2023).)

With the advent of action camera, the need for automatic process to level the horizon appeared since the camera is typically mounted on a vehicle or a person and no one operates the camera while recording. (https://community.gopro.com/s/article/what-is-horizon-leveling?language=en_US). This feature will only level videos on the horizontal axis, meaning that any movement from panning up or down will still be visible in shots.

Connected wearable devices such as smartwatches are gaining in popularity. As the technology improves over time, the quality of the smartwatch display and the computing power allow now to playback video on those screens. Since battery consumption can be heavily impacted by decoding and displaying video on those smartwatches, certain manufacturers may restrict the use of it.

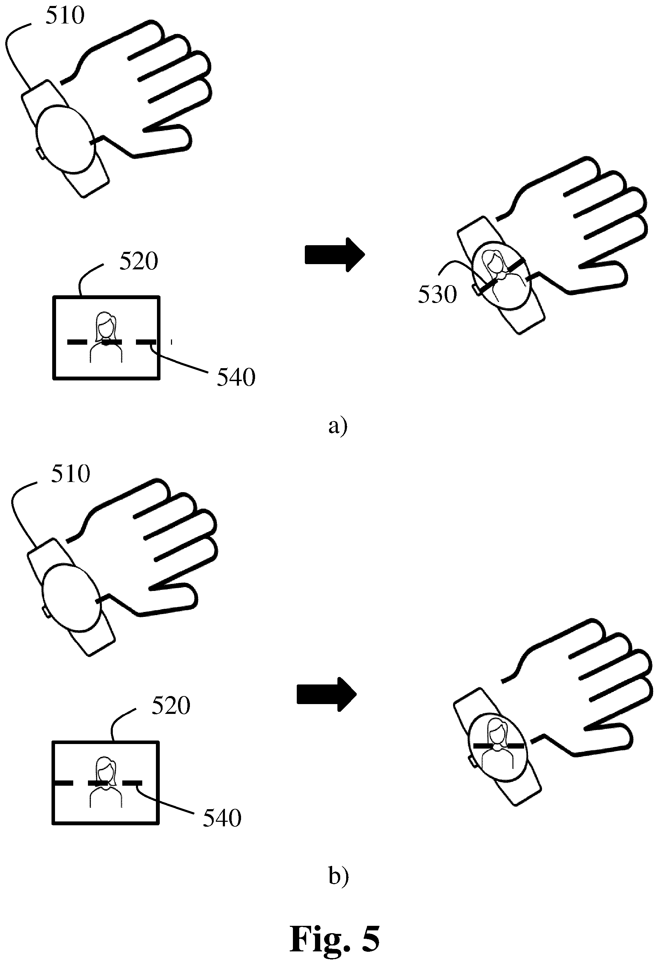

However, a connected wearable device may display a video in such a way that the horizontal axis of the video is aligned with the horizontal axis of the connected wearable device. That is, the connected wearable device assumes that the video is horizon-levelled **(**Figure 5 a)). The user must align the video with the horizon by mechanically moving the arm and wrist.

Watching a video on a smartwatch can be essential for several types of applications such as watching a video call message, having a real-time video call with a remote participant, watching a movie/clip/video.

In all those relevant applications, this implies that the user will be staring at the smartwatch for a substantial amount of time from minutes to possibly hours. Therefore, requiring the user to hold a straight arm aligned to align the video with the natural horizon with for the duration of the video is a poor user experience.

Stimm et al. (U.S. Patent Application No 17/744,949, 1 sept. 2022.) define a method to correct for misalignment of the horizon and a captured video by automatically defining a viewing window within the original captured view that will constitute the recorded video. This way, the recorded video is guaranteed to have contain horizon-levelled views. Stimm assumes the playback of the video is done on a screen which is aligned with the horizon, hence correcting the issue only in this case. Stimm corrects the misalignment before encoding the video. As a result, there is no information from the receiver's perspective to know if the video has horizon-levelled views or not and for which duration of the video.

Therefore, in the field for displaying image/video, there is a need to horizon-levelling regardless of the display/capture device orientation to provide a higher degree of Quality of Experience (QoE).

At least one exemplary embodiment of the present disclosure has been devised with the foregoing in mind.

### SUMMARY

The following section presents a simplified summary of the at least one exemplary embodiment in order to provide a basic understanding of some aspects of the present disclosure. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present disclosure, there is provided a method of signaling encapsulated data representing image samples of at least one image, the method comprising:
- writing the image samples as encapsulated data ; and
- writing at least one image horizon data as encapsulated data, each image horizon data being representative of a horizon line of one of the at least one image.

According to a second aspect of the present invention, there is provided a method of displaying at least one image from encapsulated data, the method comprising for each of the at least one image:
- obtaining a horizon line of the at least one image from the encapsulated data;
- rotating the image samples of the at least one image to align the horizon line of the at least one image with a target alignment direction; and
- displaying the rotated image.

In one exemplary embodiment, obtaining a horizon line of the at least one image comprises obtaining the horizon line of the at least one image from said encapsulated data or determining the image horizon line of the at least one image.

In one exemplary embodiment, the horizon line of the at least one image is determined as being a line that intersects an image view plane and a plane whose normal is a vertical vector on a line passing through Earth's center.

In one exemplary embodiment, the horizon line of the at least one image is determined by analyzing visual content of the at least one image.

In one exemplary embodiment, the image horizon data and/or the target alignment direction is/are determined from stored predetermined data, from user preferences.

In one exemplary embodiment, the at least one image is a still image.

In one exemplary embodiment, the at least one image is a video frame of a video.

In one exemplary embodiment, the horizon line and/or the target alignment direction may be determined according to user's decisions along the display of the video.

In one exemplary embodiment, the image horizon data and/or the target alignment direction is/are determined for each of the at least one video frame or for each group of video frames or for the video.

In one exemplary embodiment, the target alignment direction is determined as a line passing through of both user's eyes.

In one exemplary embodiment, the image horizon data of one of the at least one image indicates at least one of the following information:
- an angle between the horizon line of said image and a horizontal axis of said image;
- a gravity vector direction;
- a gravity vector magnitude corresponding to a gravity force.

According to a third aspect, there is provided a container formatted to include encapsulated data obtained from a method of the first aspect.

In one exemplary embodiment, the container is a binary file, or a supplementary enhanced information message.

In one exemplary embodiment, the container is a ISOBMFF formatted file that conforms to the standard ISO/IEC 14496-12 or one of its derivatives.

According to a fourth aspect, there is provided an apparatus comprises means for performing one of the method of the first, second and/or third aspects.

According to a fifth aspect, there is provided a computer program product including instructions which, when the program is executed by one or more processors, causes the one or more processors to carry out a method of the first, second and/or third aspects.

According to a sixth aspect, there is provided a non-transitory storage medium carrying instructions of program code for executing a method a method of the first, second and/or third aspects.

The specific nature of at least one of the exemplary embodiments as well as other objects, advantages, features and uses of said at least one of exemplary embodiments will become even more apparent from the following description of examples taken in conjunction with the accompanying drawings.

### BRIEF DESCRIPTION OF THE DRAWINGS

Reference will now be made, by way of example, to the accompanying drawings which show exemplary embodiments of the present disclosure, and in which:
**Figure 1** shows an example of a horizon-levelled feature applied on a captured image according to prior art;
**Figure 2** shows a schematic block diagram of steps of a method of signaling encapsulated data representing image data of at least one image, in accordance with at least one exemplary embodiment of the present invention.
**Figure 3** shows an example of horizon line determined by analyzing the visual content of an image;
**Figure 4** shows a schematic block diagram of steps of a method of displaying at least one image from encapsulated data, in accordance with at least one exemplary embodiment of the present invention;
**Figure 5** shows schematically an example of a horizon-levelling of an image intended to be displayed on a screen of a connected wearable device in accordance with an exemplary embodiment of the present disclosure;
**Figure 6** shows schematically an example of a horizon-levelling of an image recorded by a tilted device in accordance with an exemplary embodiment of the present disclosure;
**Figure 7** shows schematically a payload of a **horizon_information** SEI message carrying an image horizon data in accordance with an exemplary embodiment;
**Figure 8** shows schematically a payload of a **horizon_information** SEI message carrying an image horizon data in accordance with an exemplary embodiment;
**Figure 9** shows schematically a payload of a **horizon_information** SEI message carrying an image horizon data in accordance with an exemplary embodiment;
**Figure 10** shows schematically a payload of a **horizon_information** SEI message carrying an image horizon data in accordance with an exemplary embodiment;
**Figure 11** shows schematically a payload of a **horizon_information** SEI message carrying an image horizon data in accordance with an exemplary embodiment;
**Figure 12** shows schematically a payload of a **horizon_information** SEI message carrying an image horizon data in accordance with an exemplary embodiment;
**Figure 13** shows schematically an overview of encapsulated data relative to a static image horizon data of an image in accordance with an exemplary embodiment;
**Figure 14** shows schematically an overview of encapsulated data relative to a dynamic image horizon data of a video in accordance with an exemplary embodiment;
**Figure 15** shows a schematic block diagram illustrating an example of a system in which various aspects and exemplary embodiments are implemented.

Similar or same elements are referenced with the same reference numbers.

### DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present disclosure is intended to cover all modifications, equivalents, and alternatives falling within the spirit and scope of the present disclosure.

An image may be a video frame belonging to a video, i.e. a temporal sequence of video frames. A temporal relationship exists between the video frames of a video.

An image may also be a still image.

An image comprises at least one component (also called channel) determined by a specific picture/video format which specifies all information relative to samples values and all information which may be used by a display unit and/or any other device to display and/or to decode image data related to said image in order to generate pixel values.

An image comprises at least one component usually expressed in the shape of an 2D array of samples.

A monochrome image comprises a single component and a color image (also denoted texture image) may comprise three components.

For example, a color image may comprise a luma (or luminance) component and two chroma components when the image/video format is the well-known (Y,Cb,Cr) format or may comprise three color components (one for Red, one for Green and one for Blue) when the image/video format is the well-known (R,G,B) format. The image/video format may also be the well-known (R,G,B,D) forma (D for depth information).

An image may also be an infra-red image.

Each component of an image may comprise a number of samples relative to a number of pixels of a display screen on which the image is intended to be displayed. For instance, the number of samples comprised in a component may be the same as, or a multiple (or fraction) of, a number of pixels of a displaying surface on which the image is intended to be displayed.

The number of samples comprised in a component may also be a multiple (or fraction) of a number of samples comprised in another component of a same image.

For example, in the case of an image/video format comprising a luma component and two chroma components like the (Y,Cb,Cr) format, dependent on the color format considered, the chroma component may contain half the number of samples in width and/or height, relative to the luma component.

A sample is the smallest visual information unit of a component composing an image. A sample value may be, for example a luma or chroma value or a colour value of the red, green or blue component of a (R, G, B) format.

A pixel value of a displaying surface may be represented by one sample for monochrome image and by multiple co-located samples for color image. Co-located samples associated with a pixel mean samples corresponding to the location of a pixel in the display screen.

It is common to consider an image as being a set of pixel values, each pixel being represented by at least one sample.

At least one of the aspects generally relates to signaling encapsulated data representing image samples of at least one image and at least one image horizon data. An image horizon data is representative of a horizon line of one of the at least one image. In the following, exemplary embodiments of the present disclosure are discussed by considering an image as being either a still image or a video frame of a video. When the image is a still image, a single image horizon data is written as encapsulated data and when the image is a video frame of a video, at least one image horizon data is written as encapsulated data.

One other aspect generally relates to producing/writing and possibly storing those encapsulated data in a container or transmitting them into a bitstream and reading/accessing those encapsulated data from a container or decoding them from a bitstream. A container may then be a data structure in a bitstream, a network packet or a binary file.

Encapsulation is a process of wrapping media representation within a container. Binary structures such as binary files are one instantiation of a container. Binary files define the syntax for parsing and understanding the structures of files. They have a start and an end and typically holds self-contained information. Binary files are generally transported and stored as a whole. However, binary files may be further segmented into smaller file units for the purpose of transmission over a network such as using HTTP-based transport. Popular standards for HTTP-based streaming are Apple HTTP Live Streaming (IETF Internet draft) and MPEG-DASH (Dynamic Adaptive Streaming over HTTP, ISO/IEC 23009-1).

In the following, exemplary embodiments of the present disclosure are described by considering encapsulation of image samples and at least one image horizon data into a file based on an instantiation of a binary file, called ISOBMFF file as defined in the standard ISO/IEC 14496-12. But other file instantiation may be used without any limit of the scope of the present disclosure. Basically, ISOBMFF defines boxes to organize the data in a binary form. A file is then composed of a series of boxes. Each box has a type coded on 4 bytes and a size. The content of each box is then specified by either the ISOBMFF specification or by one of its derivative specification.

When transmitting media data, a real-time protocol may also be chosen in order to meet the requirement of a targeted application. This is the case for instance for video conversional applications. In this case, bitstreams comprising data representing image samples of at least one image and at least one image horizon data are typically encapsulated into transport packets (containers) and not as a file structure. For example, Real-time Transport Protocol (RTP) (RFC 3550) could be used. But other transport packet encapsulation may be used without any limit of the scope of the present disclosure.

Exemplary embodiments of a transport packet encapsulation could also be deduced from the following described exemplary embodiments of a file encapsulation by considering a transport standard as instantiation of a transport packet encapsulation rather than the described file encapsulation.

The at least one exemplary embodiment may apply to pre-existing or future-developed, and extensions of standards and recommendations. Unless indicated otherwise, or technically precluded, the aspects described in the present disclosure may be used individually or in combination.

The principles of the present disclosure are to signal encapsulated data representing both image samples of at least one image and at least one image horizon data, each image horizon data being representative of a horizon line of the at least one image. Said encapsulated data may be stored and/or transmitted as efficiently possible based on their different characteristics. At a later stage, image samples of each of the at least one image are obtained ; a horizon line of the at least one image is obtained and the image samples of the at least one image are rotated to align the horizon line of the at least one image with a target alignment direction and the rotated image samples of the at least one image are displayed.

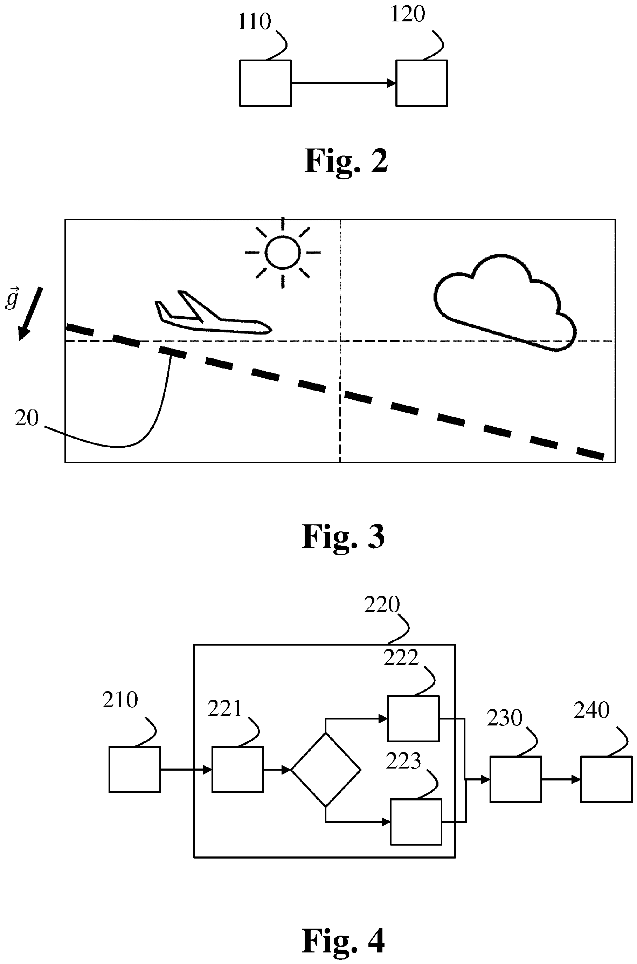

**Figure 2** shows a schematic block diagram of steps of a method 100 of signaling encapsulated data representing image data of at least one image, in accordance with at least one exemplary embodiment of the present invention.

In step 110, the image samples is written as encapsulated data.

In step 120, the at least one image horizon data is written as encapsulated data. Each image horizon data is representative of a horizon line of one of said at least one image.

In one exemplary embodiment, image horizon data of the at least one image may comprise parameters describing the horizon line crossing an image plane.

In one exemplary embodiment of step 233, the horizon line of the at least one image may be determined as being a line that intersects the image view plane and a plane whose normal is a vertical vector on a line passing through Earth's center.

In one exemplary embodiment, one horizon line of an image may comprise measuring inertial movement of a recording device (device that records the image) for detecting a vertical direction passing through the Earth's center and determining the horizon line as a line resulting of the intersection of the image view plane and the plane whose normal is this vertical direction while the resulting line passes through the image center point.

In one exemplary embodiment, one horizon line of an image may comprise analyzing the visual content of the at least one image e.g. faces, objects, texts, document which is by nature oriented, i.e. having a top and bottom (in this case, it is irrespective of the natural horizon) for determining the horizon line.

**Figure 3** shows an example of horizon line determined by analyzing the visual content of an image.

An image may represent ground and sky. A horizon line, corresponding to the natural horizon, may then be determined by splitting pixels of the image corresponding to the ground from those corresponding to the sky. Well-known classification/segmentation methods exist. But the natural horizon (ground to sky) if not always present in an image as shown in **Figure 3** for example. In that case, the horizon line 20 may be determined as being a line that intersects the image view plane and a plane whose normal is a vector *̅g̅*̅ on a line passing through Earth's center.

**Figure 4** shows a schematic block diagram of steps of a method 200 of displaying at least one image from encapsulated data, in accordance with at least one exemplary embodiment of the present invention.

Each of the at least one image is considered and the following steps 210-240 apply on each of said at least one image.

In step 210, image samples of the at least one image are obtained from encapsulated data.

In one exemplary embodiment of step 210, encoded image samples of the at least one image are obtained from encapsulated data and the image samples are obtained by decoding the encoded image samples.

In step 220, a horizon line of the at least one image is obtained.

In step 230, the image samples of the at least one image are rotated to align the horizon line of the at least one image with a target alignment direction.

In step 240, the rotated image samples of the at least one image are displayed for example on a screen of a playback device.

In one exemplary embodiment, obtaining (step 220) a horizon line of the at least one image may comprise:
- determining (step 221) whether image horizon data representative of the horizon line of the at least one image can be obtained from encapsulated data;
- if image horizon data representative of the horizon line of the at least one image can be obtained from encapsulated data, then obtaining (step 222) the horizon line of the at least one image from said image horizon data obtained by parsing said encapsulated data; otherwise determining (step 223) the image horizon line of the at least one image.

In one exemplary embodiment, the image horizon data and/or the target alignment direction may be determined from stored predetermined data, from user preferences.

In one exemplary embodiment, the at least one image is a still image.

In one exemplary embodiment, the at least one image is a video frame of a video.

The alignment of each video frame of the video by rotation when displayed is a continuous process which can be faster or slower than the video frame rate because the playback device orientation may change as the user moves or the user may choose to continue watching the video on another device which has a different orientation or the horizon direction in the video may vary over time.

In one exemplary embodiment, the horizon line and/or the target alignment direction may be determined according to user's decisions along the display of the video (when the video is displayed).

A same horizon line may then be stored and used to display a still image or a video. But the stored predetermined data and/or user preferences may indicate that the horizon line shall be obtained for each video frame of a video (obtained at the video frame rate) or for a group of video frames (obtained at a rate lower than the video frame rate).

In one exemplary embodiment, the image horizon data and/or the target alignment direction may be determined for each of the at least one video frame or for each group of video frames or for the video.

A same target alignment direction may then be stored and used to display a still image or a video. But the stored predetermined data and/or user preferences may indicate that the target alignment direction shall be obtained for each video frame of a video or for a group of video frames.

In one exemplary embodiment, the target alignment direction is determined as a line passing through of both user's eyes.

In one exemplary embodiment, the target alignment direction is determined as the Earth's horizon.

**Figure 5** shows schematically an example of a horizon-levelling of an image intended to be displayed on a screen of a connected wearable device in accordance with an exemplary embodiment of the present disclosure.

In this example, the video playback device 510, e.g. a smartwatch, is tilted, possibly due to the body position of the user. Then, it is desirable to compensate for this angle in such a way the video is presented as being horizon-levelled from the perspective of the user.

According to prior art (Figure 5 a), a horizon-levelling is applied to rotate the video frame in order to align the horizon line 540 of the video frame with the "horizontal" axis 530 of the video playback device 510.

According to the present disclosure, illustrated on Figure 5 b), the video frame is rotated to align the horizon line 540 with a target alignment direction defined in this example as a line passing through of both user's eyes. This provide a higher degree of Quality of Experience (QoE) for watching a video on a smartwatch for example compared to prior art.

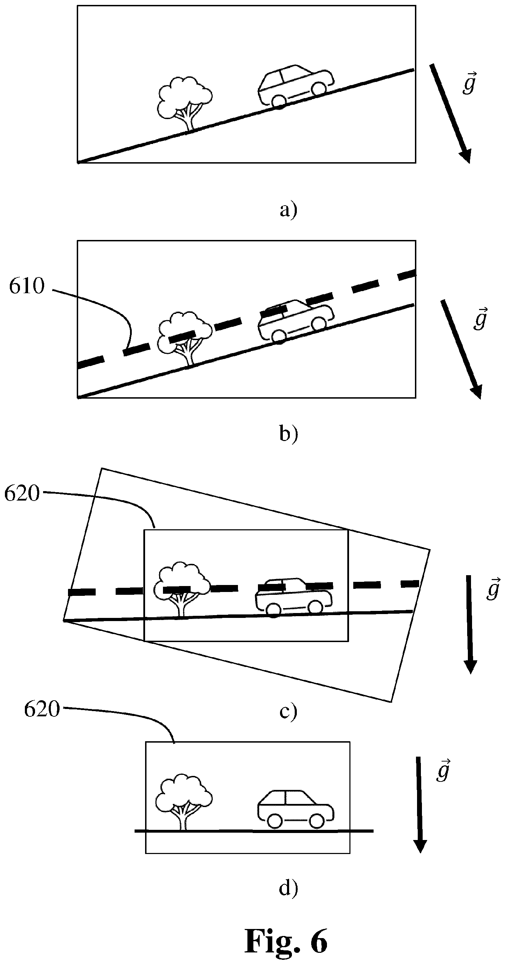

**Figure** 6 shows schematically an example of a horizon-levelling of an image recorded by a tilted device in accordance with an exemplary embodiment of the present disclosure.

In this example, a recording device is tilted and the horizon line 610 of the image is determined as being a line that intersects an image view plane and a plane whose normal is a vector *̅g̅*̅ on a line passing through Earth's center. A viewing window 620 is defined within the original captured view (Stimm et al.) and the image samples of said viewing window 620 are rotated to align the horizon line 610 with a target alignment direction that may be defined as a line passing through of both user's eyes.

In a first exemplary embodiment of methods 100 and 200, encapsulated data representing horizon image data of an image is signalled as a **horizon_information** SEI (Supplemental Enhancement Information) message following the concepts of SEI message defined in VVC (ISO/IEC 23090-3 Versatile Video Coding, ITU-T Recommendation H.266, https://www.itu.int/rec/T-REC-H.266-202008-I/en) in a bitstream comprising images samples of the image. When the image is a video frame, at least one image horizon data is signalled in at least one **horizon_information** SEI message.

Other SEI message may be used, for example SEI message defined in HEVC (ISO/IEC 23008-2 High Efficiency Video Coding, ITU-T Recommendation H.265, https://www.itu.int/rec/T-REC-H.265-202108-P/en), AVC (ISO/IEC 14496-10 Advanced Video Coding for generic audio-visual services, ITU-T Recommendation H.264, https://www.itu.int/rec/T-REC-H.264-202108-P/en) or EVC ( ISO/IEC 23094-1 Essential video coding).

For the MPEG/ITU family of video codecs, i.e. AVC, HEVC and VVC, the SEI messages can be leveraged by defining a new payload type for the image horizon data. For other video codecs, e.g. AV1 (https://fr.wikipedia.org/wiki/AV1_(codec)), similar approaches can be used using the bitstream metadata provided by the given codec.

Following the VVC design, the **horizon_information** SEI message carries parameters that describe the image horizon data with respect to image data of at least one image encoded in a bitstream.

In one exemplary embodiment, the image horizon data of an image indicate an angle between the horizon line of the image and the horizontal axis of the image.

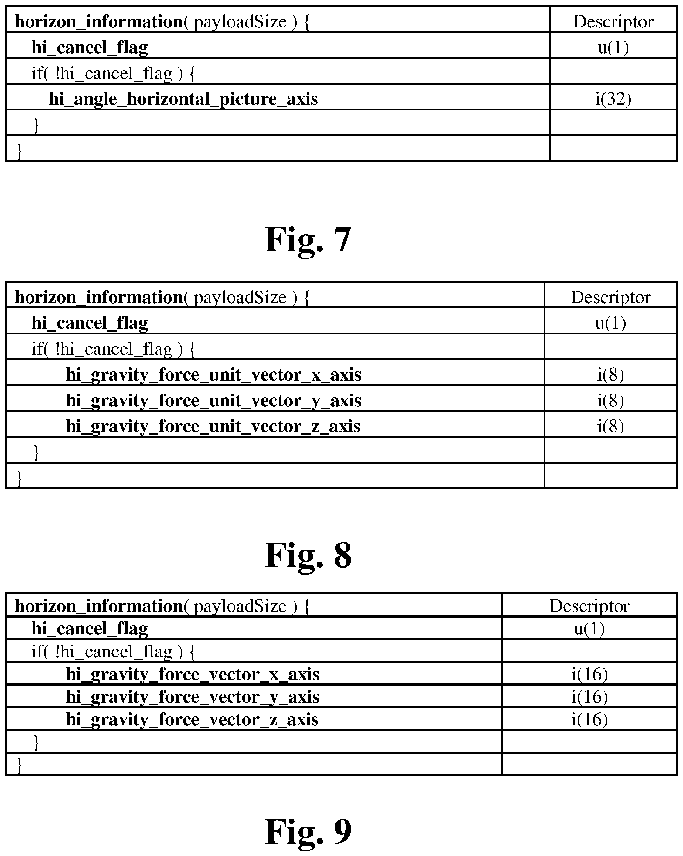

**Figure 7** shows schematically a payload of a **horizon_information** SEI message carrying an image horizon data in accordance with said exemplary embodiment.

The payload comprises a syntax element **hi_cancel_flag** that equals 1 to indicate that the SEI message cancels the persistence of any previous **horizon_information** SEI message that is associated with one or more layers to which the **horizon_information** SEI message applies. The syntax element **hi_cancel_flag** equals 0 to indicate that a syntax element **hi_angle_horizontal_picture_axis** follows.

The payload may further comprise the syntax element **hi_angle_horizontal_picture_axis** to indicate the angle between the horizon line of the image and the horizontal axis of the image in units of 2⁻¹⁶ degrees. The value of **hi_angle_horizontal_picture_axis** shall be in the range of -180 * 2¹⁶ (i.e., -11 796 480) to 180 * 2¹⁶ - 1 (i.e., 11 796 479), inclusive.

In one variant, the bit length 16 to indicate said angle may be higher or lower depending on the granularity that is desired.

In one exemplary embodiment, the image horizon data indicate a gravity vector direction.

**Figure 8** shows schematically a payload of a **horizon_information** SEI message carrying an image horizon data in accordance with said exemplary embodiment.

The **horizon_information** SEI message carries parameters that describe a gravity vector direction corresponding to a gravity field.

Signalling the gravity vector direction prevents an ambiguity for defining a horizon line of an image that occurs when the image view plane is orthogonal to the gravity field.

The payload comprises a syntax element **hi_cancel_flag** that equal 1 to indicate that the SEI message cancels the persistence of any previous **horizon_information** SEI message that is associated with one or more layers to which the **horizon_information** SEI message applies. The syntax element **hi_cancel_flag that** equal 0 to indicate that syntax elements **hi_gravity_force_unit_vector_x_axis, hi_gravity_force_unit_vector_y_axis** and **hi**_**gravity _force unit vector zaxis** follow.

The payload may further comprise the syntax element **hi**_**gravity_force_unit_vector_x_axis** to indicate the component on the x-axis of the unit vector supporting the gravity force in units of 2⁻⁸. The x-axis is aligned with the horizontal direction of the image and oriented from left to right. The value of **hi**_**gravity_force_unit_vector_x_axis** shall be in the range of - 2⁷ (i.e., -128) to 2⁷ - 1 (i.e., 127), inclusive.

The payload may further comprise the syntax element **hi_gravity_force_unit_vector_y_axis** indicates the component on the y-axis of the unit vector supporting the gravity force in units of 2⁻⁸. The y-axis is aligned with the vertical direction of the image and oriented from bottom to up. The value of hi_gravity_force_unit_vector_y_axis shall be in the range of - 2⁷ (i.e., -128) to 2⁷ - 1 (i.e., 127), inclusive.

The payload may further comprise the syntax element **hi_gravity_force_unit_vector_z_axis** indicates the component on the z-axis of the unit vector supporting the gravity force in units of 2⁻⁸. The z-axis is orthogonal to the picture and oriented from the image towards the outside following the right-hand rule, i.e. the z-axis resulting from the cross product of the x-axis and y-axis . The value of hi_gravity_force_unit_vector_z_axis shall be in the range of - 2⁷ (i.e., -128) to 2⁷ - 1 (i.e., 127), inclusive.

Note that the x, y and z axis definitions correspond to the definitions used for sensor data defined in Android (https://developer.android.com/guide/topics/sensors/sensors_overview#sens ors-coords). However, any other conventions for the axis could also be used.

Moreover, 8 bits are used for representing the unit vector components but higher bit depth can also be chosen, e.g. 16.

The payload of the **horizon_information** SEI message of **Figure 8** signals unit gravity vector direction and not the physical measure magnitude of the gravity force. Indeed, the present disclosure requires a direction of the gravity force but not necessary its intensity.

In one exemplary embodiment, the image horizon data indicate gravity vector magnitude corresponding to a gravity force.

Said exemplary embodiment is advantageous because the magnitude of the gravity force may be used for other purposes.

**Figure 9** shows schematically a payload of a **horizon_information** SEI message carrying an image horizon data in accordance with said exemplary embodiment.

The **horizon_information** SEI message carries parameters that describe a gravity vector magnitude corresponding to a gravity force.

The payload comprises a syntax element **hi_cancel_flag** that equal 1 to indicate that the SEI message cancels the persistence of any previous **horizon_information** SEI message that is associated with one or more layers to which the **horizon_information** SEI message applies. The syntax element **hi_cancel_flag that** equal 0 to indicate that syntax elements **hi**_**gravity_force_unit_vector_x_axis, hi_gravity_force_unit_vector_y_axis** and **hi**_**gravity _force unit vector zaxis** follow.

The payload may further comprise the syntax element **hi_gravity_force_x_axis to** indicate the component on the x-axis of the unit vector supporting the gravity force in units of 2⁻¹² m²/s. The x-axis is aligned with the horizontal direction of the oriented and oriented from left to right. The value of **hi_gravity_forcex_axis** shall be in the range of -16* 2¹² (i.e., -65 536) to 16*2¹² - 1 (i.e., 65 535), inclusive.

The payload may further comprise the syntax element **hi_gravity_force_y_axis** indicates the component on the y-axis of the unit vector supporting the gravity force in units of 2⁻¹² m²/s. The y-axis is aligned with the vertical direction of the image and oriented from bottom to up. The value of **hi_gravity_force_y_axis** shall be in the range of -16* 2¹² (i.e., -65 536) to 16*2¹² - 1 (i.e., 65 535), inclusive.

The payload may further comprise the syntax element **hi_gravity_force_z_axis** indicates the component on the z-axis of the unit vector supporting the gravity force in units of 2⁻¹² m²/s. The z-axis is orthogonal to the picture and oriented from the image towards the outside following the right-hand rule, i.e. the z-axis is the result of the cross product of the x-axis and the y-axis. The value of **hi_gravity_force_z_axis** shall be in the range of -16* 2¹² (i.e., -65 536) to 16*2¹² - 1 (i.e., 65 535), inclusive.

In said exemplary embodiment, the signaling allows for values up to 16 m²/s for the gravity information which would allow for gravity measured at the surface of most of the planets in the solar system.

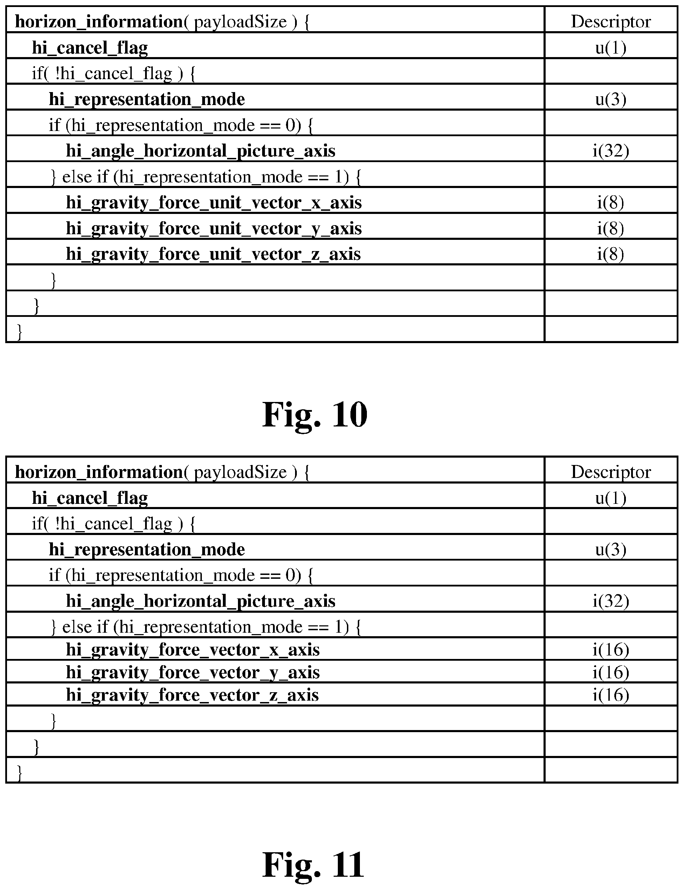

**Figure 10** shows schematically a payload of a **horizon_information** SEI message carrying an image horizon data in accordance with an exemplary embodiment.

The **horizon_information** SEI message carries parameters that describe either an angle between the horizon line of the image and the horizontal axis of the image (**Figure 7**) or a gravity vector direction corresponding to a gravity field (**Figure 8**)**.**

The payload further comprises a syntax element **hi_representation_mode** to indicate a mode to represent the image horizontal data. The syntax element **hi_representation_mode equals 0** to indicate the syntax element **hi_angle_horizontal_picture_axis** follows and equal 1 to indicate the syntax elements **hi**_**gravity_force_unit_vector_x_axis, hi_gravity_force_unit_vector_y_axis** and **hi**_**gravity _force unit vector zaxis** follow.

**Figure 11** shows schematically a payload of a **horizon_information** SEI message carrying an image horizon data in accordance with an exemplary embodiment.

The **horizon_information** SEI message carries parameters that describe either an angle between the horizon line of the image and the horizontal axis of the image (**Figure 7**) or gravity vector magnitude corresponding to a gravity force (**Figure 9**).

The payload further comprises a syntax element **hi_representation_mode** to indicate a mode to represent the image horizontal data. The syntax element **hi_representation_mode equals 0** to indicate the syntax element **hi_angle_horizontal_picture_axis** follows and equal 1 to indicate the syntax elements syntax elements **hi_gravity_force_unit_vector_x_axis, hi_gravity_force_unit_vector_y_axis** and **hi**_**gravity _force unit vector zaxis** follow.

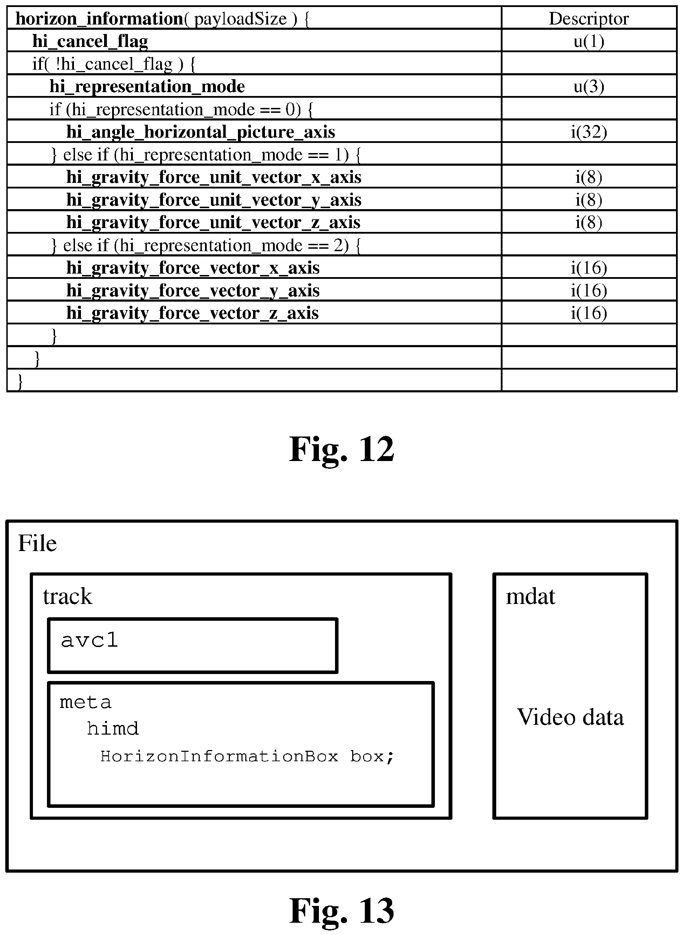

**Figure 12** shows schematically a payload of a **horizon_information** SEI message carrying an image horizon data in accordance with an exemplary embodiment.

The **horizon_information** SEI message carries parameters that describe either an angle between the horizon line of the image and the horizontal axis of the image (**Figure 7**), a gravity vector direction (**Figure 8**) or gravity vector magnitude corresponding to a gravity force (**Figure 9**)**.**

The payload further comprises a syntax element **hi_representation_mode** to indicate a mode to represent the image horizontal data. The syntax element **hi_representation_mode equals 0** to indicate the syntax element **hi_angle_horizontal_picture_axis** follows, equal 1 to indicate that syntax elements **hi**_**gravity_force_unit_vector_x_axis, hi_gravity_force_unit_vector_y_axis** and **hi_gravity_force_unit_vector_z_axis** follow and equal 2 to indicate the syntax elements syntax elements **hi**_**gravity_force_unit_vector_x_axis, hi_gravity_force_unit_vector_y_axis** and **hi**_**gravity _force unit vector zaxis** follow.

According to the first examplary embodiment of methods 100 and 200, image horizon data representative of a horizon line of the at least one image is considered as being obtained by parsing encapsulated data (step 231) when the **horizon_information** SEI message is present in the bitstream. The horizon line of the at least one image is obtained (step 232) by parsing the detected **horizon_information** SEI according to the specified format.

In a second exemplary embodiment of methods 100 and 200, encapsulated data representing image data of an image and one image horizon data of the image are written in a media container and said encapsulated data are obtained by parsing a media container.

In one exemplary embodiment, image data of an image and one image horizon data of the image may be encapsulated in a formatted file (file-based container) for file storage or segment streaming or packet-based, e.g. RTP, for network transmission.

In the following, a media container is an ISOBMFF formatted file that conforms with the standard ISO/IEC 14496-12 or one of its derivatives. However, other media container, e.g. WebM, (https://www.webmproject.org/docs/container/) may be used.

To store the image horizon data in a media container, it is important to consider whether the image horizon data is static or dynamic, that is whether it varies over time.

**Figure 13** shows schematically an overview of encapsulated data relative to a static image horizon data of an image in accordance with an exemplary embodiment.

The ISOBMFF formatted file of **Figure 13** may comprise a video track identified by a video handler 'vide' within a 'trak' box. A codec of the video samples may be the H.264/AVC codec ('avc1'), and the encoding of the video samples follows the constraints defined by a 'avc1' sample entry. Note that the sample entry 'avc1' may be defined in the ISO/IEC 14496-15 standard.

The ISOBMFF formatted file may further comprise a media data box ('mdat') that comprises the encoded image samples and image horizon data and all the other the boxes which can be considered as metadata since they describe the content stored in the mdat and how to access it.

The ISOBMFF formatted file further comprise a **MetaBox** (`meta') that comprises a specific handler 'himd' (for image horizon data) to indicate that the presence of a new box **Horizon Information Box** (character code 'hoif') in the ISOBMFF formatted file is required.

In one exemplary embodiment, the box **HorizonlnformationBox** defines the image horizon data of an image as being an angle between the image horizon line and the horizontal axis of the image in units of 2⁻¹⁶ degrees. The value of **angle_horizontal_picture_axis** shall be in the range of -180 * 2¹⁶ (i.e., -11 796 480) to 180 * 2¹⁶ - 1 (i.e., 11 796 479), inclusive.

An example of syntax of the box **Horizon Information Box** is given in Table 1 where the box **HorizonInformationBox** inherits from the class FullBox.

**Table 1**

| |
|---|
| ```
aligned(8) class HorizonInformationBox
    extends FuIIBox('hoif', version = 0, 0) {
    int(32) angle horizontal_picture axis;
}
``` |

In one exemplary embodiment, the box **HorizonlnformationBox** defines the image horizon data of an image as being a gravity vector direction corresponding to a gravity field.

An example of syntax of the box **Horizon Information Box** is given in Table 2 where the box **HorizonInformationBox** inherits from the class FullBox.

**Table 2**

| |
|---|
| ```
aligned(8) class HorizonInformationBox
    extends FuIIBox('hoif', version = 0, 0) {
    int(8) gravity_force_unit_vector_x_axis;
    int(8) gravity_force_unit_vector_y_axis;
    int(8) gravity_force_unit_vector_z_axis;
}
``` |

The syntax element **gravity_force_unit_vector_x_axis** indicates the component on the x-axis of the unit vector supporting the gravity force in units of 2⁻⁸. The x-axis is aligned with the horizontal direction of the image and oriented from left to right. The value of gravity_force_unit_vector_x_axis shall be in the range of - 2⁷ (i.e., -128) to 2⁷ - 1 (i.e., 127), inclusive.

The syntax element **gravity_force_unit_vector_y_axis** indicates the component on the y-axis of the unit vector supporting the gravity force in units of 2⁻⁸. The y-axis is aligned with the vertical direction of the image and oriented from bottom to up. The value of gravity_force_unit_vector_y_axis shall be in the range of - 2⁷ (i.e., -128) to 2⁷ - 1 (i.e., 127), inclusive.

The syntax element **gravity_force_unit_vector_z_axis** indicates the component on the z-axis of the unit vector supporting the gravity force in units of 2⁻⁸. The z-axis is orthogonal to the image and oriented from the image towards the outside following the right-hand rule, i.e., the z-axis resulting from the cross product of the x-axis and y-axis. The value of gravity_force_unit_vector_z_axis shall be in the range of - 2⁷ (i.e., -128) to 2⁷ - 1 (i.e., 127), inclusive.

In one exemplary embodiment, the box **HorizonlnformationBox** defines the image horizon data of an image as being a gravity vector magnitude corresponding to a gravity force.

An example of syntax of the box **Horizon Information Box** is given in Table 3 where the box **HorizonInformationBox** inherits from the class FullBox.

**Table 3**

| |
|---|
| ```
aligned(8) class HorizonInformationBox
    extends FuIIBox('hoif', version = 0, 0) {
    int(16) gravity_force_vector_x_axis;
    int(16) gravity_force_vector_y_axis;
    int(16) gravity_force_vector_z_axis;
}
``` |

The payload may further comprise the syntax element **gravity_force_x_axis** to indicate the component on the x-axis of the unit vector supporting the gravity force in units of 2⁻¹² m²/s. The x-axis is aligned with the horizontal direction of the oriented and oriented from left to right. The value of **gravity_force_x_axis** shall be in the range of -16* 2¹² (i.e., -65 536) to 16*2¹² - 1 (i.e., 65 535), inclusive.

The payload may further comprise the syntax element **gravity_force_y_axis** indicates the component on the y-axis of the unit vector supporting the gravity force in units of 2⁻¹² m²/s. The y-axis is aligned with the vertical direction of the image and oriented from bottom to up. The value of **hi_gravity_force_y_axis** shall be in the range of -16* 2¹² (i.e., -65 536) to 16*2¹² - 1 (i.e., 65 535), inclusive.

The payload may further comprise the syntax element **gravity_force_z_axis** indicates the component on the z-axis of the unit vector supporting the gravity force in units of 2⁻¹² m²/s. The z-axis is orthogonal to the picture and oriented from the image towards the outside following the right-hand rule, i.e. the z-axis is the result of the cross product of the x-axis and the y-axis. The value of **gravity_force_z_axis** shall be in the range of -16* 2¹² (i.e., -65 536) to 16*2¹² - 1 (i.e., 65 535), inclusive.

In one exemplary embodiment, the box **HorizonInformationBox** defines the image horizon data of an image as being either an angle between the image horizon line and the horizontal axis of the image (Table 1) or a gravity vector magnitude corresponding to a gravity force (Table 2).

An example of syntax of the box **Horizon Information Box** is given in Table 4 where the box **HorizonInformationBox** inherits from the class FullBox.

**Table 4**

| |
|---|
| ```
aligned(8) class HorizonInformationBox
    extends FuIIBox('hoif', version = 0, 0) {
    unisgned int(3) representation_mode;
    unisgned int(5) reserved;
    if(representation_mode == 0) {
         int(32) angle_horizontal_picture_axis;
    } else if (representation_mode == 1) {
         int(8) gravity_force_unit_vector_x_axis;
         int(8) gravity_force_unit_vector_y_axis;
         int(8) gravity_force_unit_vector_z_axis;
    }
``` |

The syntax element **representation_mode** indicates a mode to represent the image horizontal data. The syntax element **representation_mode** equals 0 to indicate the syntax element **angle_horizontal_picture_axis** follows, equals 1 to indicate that syntax elements **gravity_force_unit_vector_x_axis, gravity_force_unit_vector_y_axis** and **gravity_force_unit_vector_z_axis** follow.

In one exemplary embodiment, the box **HorizonInformationBox** defines the image horizon data of an image as being either an angle between the image horizon line and the horizontal axis of the image (Table 1) or a gravity vector magnitude corresponding to a gravity force (Table 3).

An example of syntax of the box **HorizonInformationBox** is given in Table 5 where the box **HorizonInformationBox** inherits from the class FullBox.

**Table 5**

| |
|---|
| ```
aligned(8) class HorizonInformationBox
    extends FuIIBox('hoif', version = 0, 0) {
    unisgned int(3) representation_mode;
    unisgned int(5) reserved;
    if(representation_mode == 0) {
         int(32) angle_horizontal_picture_axis;
    } else if (representation_mode == 1) {
         int(16) gravity_force_vector_x_axis;
         int(16) gravity_force_vector_y_axis;
         int(16) gravity_force_vector_z_axis;
    }
``` |

The syntax element **representation_mode** indicates a mode to represent the image horizontal data. The syntax element **representation_mode** equals 0 to indicate the syntax element **angle_horizontal_picture_axis** follows, equals 1 to indicate that syntax elements **gravity_force_vector_x_axis, gravity_force_vector_y_axis** and **gravity_force_vector_z_axis** follow.

In one exemplary embodiment, the box **HorizonInformationBox** defines the image horizon data of an image as being either an angle between the image horizon line and the horizontal axis of the image (Table 1), or a gravity vector magnitude corresponding to a gravity force (Table 2) or a gravity vector magnitude corresponding to a gravity force (Table 3).

An example of syntax of the box **HorizonInformationBox** is given in Table 6 where the box **HorizonInformationBox** inherits from the class FullBox.

**Table 6**

| |
|---|
| ```
aligned(8) class HorizonInformationBox
    extends FuIIBox('hoif', version = 0, 0) {
     unisgned int(3) representation_mode;
    unisgned int(5) reserved;
    if(representation_mode == 0) {
        int(32) angle_horizontal_picture_axis;
    } else if (representation_mode == 1) {
         int(8) gravity_force_unit_vector_x_axis;
         int(8) gravity_force_unit_vector_y_axis;
        int(8) gravity_force_unit_vector_z_axis;
    } else if (representation_mode == 2) {
        int(16) gravity_force_vector_x_axis;
        int(16) gravity_force_vector_y_axis;
        int(16) gravity_force_vector_z_axis;
    }
``` |

The syntax element **representation_mode** indicates a mode to represent the image horizontal data. The syntax element **representation_mode** equals 0 to indicate the syntax element **angle_horizontal_picture_axis** follows, , equals 1 to indicate that syntax elements **gravity_force_unit_vector_x_axis, gravity_force_unit_vector_y_axis** and **gravity_force_unit_vector_z_axis** follow and equals 2 to indicate that syntax elements **gravity_force_vector_x_axis, gravity_force_vector_y_axis** and **gravity_force_vector_z_axis** follow.

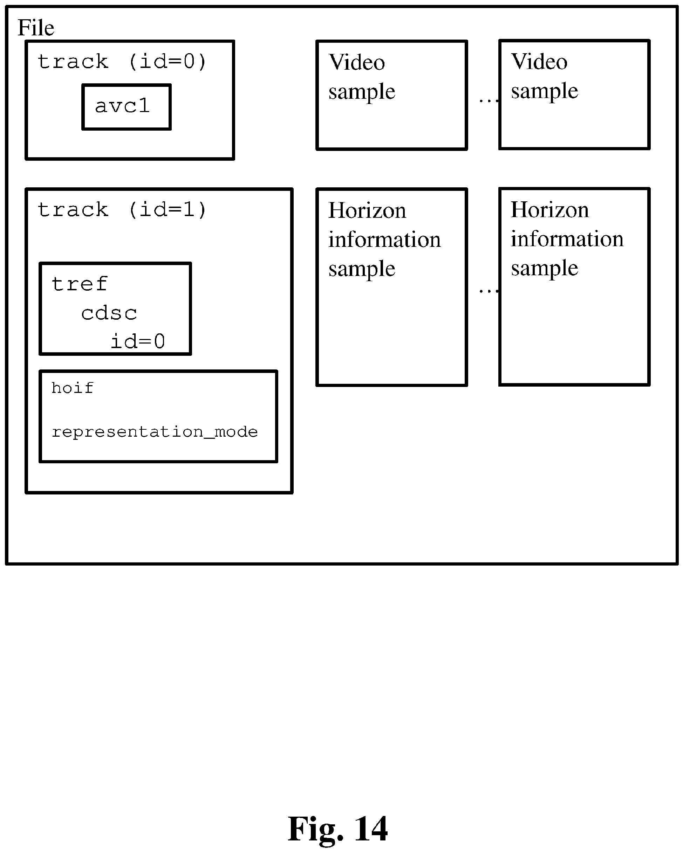

**Figure 14** shows schematically an overview of encapsulated data relative to a dynamic image horizon data of a video in accordance with an exemplary embodiment.

The ISOBMFF formatted file of **Figure 14** may comprise a first video track identified by a video handler `id=0'. A codec of the video samples may be the H.264/AVC codec ('avc1'), and the encoding of the video samples follows the constraints defined by a 'avc1' sample entry. Note that the sample entry 'avc1' may be defined in the ISO/IEC 14496-15 standard.

The ISOBMFF formatted file of **Figure 14** may comprise a timed metadata track (id=1). A track reference box ('tref') defines a reference(cdsc) between the first video track (id=0) and the timed metadata track(id=1). A new sample entry 'hoif' identifies the type of samples of track. The sample entry 'hoif' defines a representation mode for each sample of the track containing the image horizon samples.

Regarding the definition of the image horizon data of such a timed metadata track, one could use the same definition as a **HorizonInformationBox** box as discussed above in relation with **Figure 13****.**

However, allowing different representation mode of the image horizon data within a same track may be inefficient for an application. Once the playback of a video has started, it may be preferable to have all the image horizon data in a same representation mode.

Preferably, the **representation_mode** may be signaled in the sample entry.

For example, the **representation_mode** is signalled in the track containing the sample entry 'hoif'.

An example of syntax of a box **HorizonInformationSampleEntry** is given in Table 7 where the box **HorizonInformationBoxSampleEntry** inherits from the class MetaDataSampleEntry.

**Table 7**

| |
|---|
| ```
class HorizonInformationSampleEntry() extends MetaDataSampleEntry
('hoif') {
     unisgned int(3) representation_mode;
}
``` |

An example of syntax of a box **HorizonInformationSample** is given in Table 8 where the box **HorizonInformationBoxSample.**

**Table 8**

| |
|---|
| ```
 aligned(8) class HorizonInformationSample(int representation_mode) {
 
    if(representation_mode == 0) {
         int(32) angle horizontal_picture axis;
    } else if (representation_mode == 1) {
         int(8) gravity_force_unit_vector_x_axis;
         int(8) gravity_force_unit_vector_y_axis;
         int(8) gravity_force_unit_vector_z_axis;
    } else if (representation_mode == 2) {
         int(16) gravity_force_vector_x_axis;
         int(16) gravity_force_vector_y_axis;
         int(16) gravity_force_vector_z_axis;
    }
}
``` |

The semantics of those elements have been discussed above.

In variants, the representation mode may be defined to allow to select the definition of the image horizon data as either an angle between the image horizon line of a video sample and the horizontal axis of a video sample or a gravity vector direction corresponding to a gravity field or between an angle between the image horizon line of a video sample and the horizontal axis of a video sample or a gravity vector magnitude corresponding to a gravity force.

According to the second examplary embodiment of methods 100 and 200, image horizon data representative of a horizon line of the at least one image is considered as being obtained by parsing encapsulated data (step 231) when the image horizon data is static and when the ISOBMFF formatted file comprises a **MetaBox** (`meta') that comprises a specific handler 'himd' (**Figure 13**) or when the image horizon data is dynamic when the ISOBMFF formatted file comprises a timed metadata track (**Figure 14**). The horizon line of the at least one image is obtained (step 232) by parsing the image horizon data in the box **HorizonInformationBox** if the image horizon data is static and, if the image horizon data is dynamic, by parsing the box **HorizonInformationSampleEntry** of the track 'hoif' and then by parsing each box **HorizonInformationSample.**

In a third exemplary embodiment of methods 100 and 200, image data of an image and image horizon data of the image may be encapsulated in a formatted file (file-based container) for file storage or segment streaming or packet-based, e.g. RTP, for network transmission.

In an exemplary embodiment, the image horizon data may be transported via the RTP protocol (IETF RFC 3550 (2003): "RTP: A Transport Protocol for Real-Time Applications", H. Schulzrinne, S. Casner, R. Frederick and V. Jacobson) using for example HTTP header extension mechanism (IETF RFC 5285 (2008): "A General Mechanism for RTP Header Extensions", D. Singer, H. Desineni). Other transport protocol formats can be used in a similar way.

For the purpose of negotiation, the urn:3gpp:horizon-information can be used to request and expose the capability between clients, sender and receiver. In the context of 3GPP (sender and receiver are mobile network terminal), hence the urn with the term 3GPP in it.

For example, when image horizon data is successfully negotiated, a MTSI client sends the information. A MTSI client is a function in a terminal or an entity that supports MTSI in a network (3GPP TS 26.114 (" IP Multimedia Subsystem (IMS); Multimedia Telephony; Media handling and interaction ", https://www.3gpp.org/ftp/Specs/archive/26_series/26.114/26114-i30.zip (Upload date : 2023-06-26)). The image horizon data is signaled by a specific RTP header extension defined, for example, from RTP Header Extensions as specified in IETF RFC 5285 (IETF RFC 5285 (2008): "A General Mechanism for RTP Header Extensions", D. Singer, H. Desineni). The one-byte form of the header should be used. Image horizon data corresponding to urn:3gpp:horizon-information is carried as 4 bytes formatted as follows:
Bit# 31 30 29 28 27 26 25 24 23 22 21 20 19 18 17 16 15 14 13 12 11 10 9 8 7 6 5 4 3 2 1 0 (LSB)
Definition a31 a30 a29 a28 a27 a26 a25 a24 a23 a22 a21 a20 a19 a18 a17 a16 a15 a14 a13 a12 a11 a10 a9 a8 a7 a6 a5 a4 a3 a2 a1 a0

### With the following definitions:

A0 .. A32 = indicates an angle between the horizon line of the image and the horizontal axis of the image in units of 2⁻¹⁶ degrees. The angle value shall be in the range of -180 * 2¹⁶ (i.e., -11 796 480) to 180 * 2¹⁶ - 1 (i.e., 11 796 479), inclusive.

### The sending MTSI client in the terminal using a camera as source and equipped with appropriate orientation sensor(s) should measure the image horizon data from the sensor(s) that indicate the gravity and convert this information into the transmitted angle in the expected convention. The sending MTSI client may choose to send any image horizon data not necessarily based on orientation sensor(s).

### According to the third examplary embodiment of methods 100 and 200, image horizon data representative of a horizon line of the at least one image is considered as being obtained by parsing encapsulated data (step 231) when the specific RTP header extension used for signaling image horizon data is detected. The horizon line of the at least one image is obtained (step 232) by parsing the specific RTP header extension following the format specified for the corresponding urn, e.g. urn:3gpp:horizon-information.

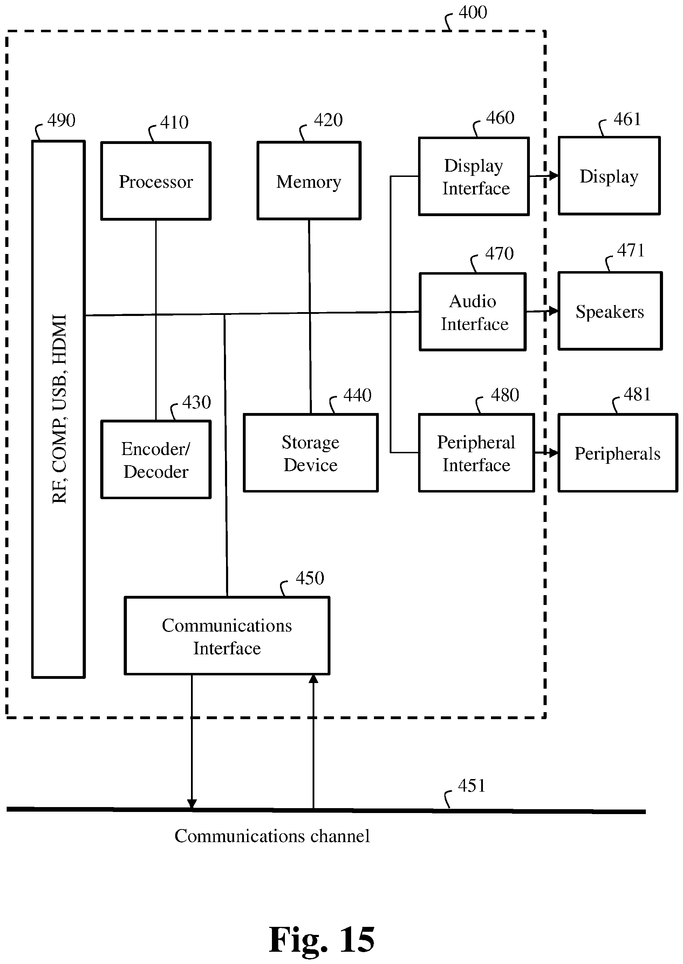

**Figure 15** shows a schematic block diagram illustrating an example of a system 400 in which various aspects and exemplary embodiments are implemented.

System 400 may be embedded as one or more devices including the various components described below. In various exemplary embodiments, system 400 may be configured to implement one or more of the aspects described in the present disclosure.

Examples of equipment that may form all or part of the system 400 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 400, singly or in combination, may be embodied in a single integrated circuit (IC), multiple ICs, and/or discrete components. For example, in at least one exemplary embodiment, the processing and encoder/decoder elements of system 400 may be distributed across multiple ICs and/or discrete components. In various exemplary embodiments, system 400 may be communicatively coupled to other similar systems, or to other electronic devices, via, for example, a communications bus or through dedicated input and/or output ports.

System 400 may include at least one processor 410 configured to execute instructions loaded therein for implementing, for example, the various aspects described in the present disclosure. Processor 410 may include embedded memory, input output interface, and various other circuitries as known in the art. System 400 may include at least one memory 420 (for example a volatile memory device and/or a non-volatile memory device). System 400 may include a storage device 440, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 440 may include an internal storage device, an attached storage device, and/or a network accessible storage device, as non-limiting examples.

System 400 may include an encoder/decoder module 430 configured, for example, to process data to provide encoded/decoded video picture data, and the encoder/decoder module 430 may include its own processor and memory. The encoder/decoder module 430 may represent module(s) that may be included in a device to perform the encoding and/or decoding functions. As is known, a device may include one or both encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in the present disclosure may be stored in storage device 440 and subsequently loaded onto memory 420 for execution by processor 410. In accordance with various exemplary embodiments, one or more of processor 410, memory 420, storage device 440, and encoder/decoder module 430 may store one or more of various items during the performance of the processes described in the present disclosure. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 410 and/or the encoder/decoder module 430 may be used to store instructions and to provide working memory for processing that may be performed during encoding or decoding.

In other exemplary embodiments, however, a memory external to the processing device (for example, the processing device may be either the processor 410 or the encoder/decoder module 430) may be used for one or more of these functions. The external memory may be the memory 420 and/or the storage device 440, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

### The input to the elements of system 400 may be provided through various input devices as indicated in block 490. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present disclosure is implemented in the automotive domain.

In various exemplary embodiments, the input devices of block 490 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream may be provided to various processing elements, including, for example, processor 410, and encoder/decoder 430 operating in combination with the memory and storage elements to process the data stream as necessary for presentation on an output device.

Various elements of system 400 may be provided within an integrated housing. Within the integrated housing, the various elements may be interconnected and transmit data therebetween using suitable connection arrangement 490, for example, an internal bus as known in the art, including the I2C bus, wiring, and printed circuit boards.

The system 400 may include communication interface 450 that enables communication with other devices via communication channel 451. The communication interface 450 may include, but is not limited to, a transceiver configured to transmit and to receive data over communication channel 451. The communication interface 450 may include, but is not limited to, a modem or network card and the communication channel 451 may be implemented, for example, within a wired and/or a wireless medium.

Data may be streamed to system 400, in various exemplary embodiments, using a Wi-Fi network such as IEEE 802.11. The Wi-Fi signal of these exemplary embodiments may be received over the communications channel 451 and the communications interface 450 which are adapted for Wi-Fi communications. The communications channel 451 of these exemplary embodiments may be typically connected to an access point or router that provides access to outside networks including the Internet for allowing streaming applications and other over-the-top communications.

Other exemplary embodiments may provide streamed data to the system 400 using a set-top box that delivers the data over the HDMI connection of the input block '90.

Still other exemplary embodiments may provide streamed data to the system 400 using the RF connection of the input block 490.

The streamed data may be used as a way for signaling information used by the system 400. The signaling information may comprise a bitstream and/or information such a number of pixels of a video picture, any coding/decoding setup parameters, an alignment status, alignment reference data, overlap status, resampling data, interpolation data, and/or calibration data.

It is to be appreciated that signaling may be accomplished in a variety of ways. For example, one or more syntax elements, flags, and so forth may be used to signal information to a corresponding decoder in various exemplary embodiments.

System 400 may provide an output signal to various output devices, including a display 461, speakers 471, and other peripheral devices 481. The other peripheral devices 481 may include, in various examples of exemplary embodiments, one or more of a stand-alone DVR, a disk player, a stereo system, a lighting system, and other devices that provide a function based on the output of system 400.

In various exemplary embodiments, control signals may be communicated between the system '00 and the display 461, speakers 471, or other peripheral devices 481 using signaling such as AV.Link (Audio/Video Link), CEC (Consumer Electronics Control), or other communications protocols that enable device-to-device control with or without user intervention.

The output devices may be communicatively coupled to system 400 via dedicated connections through respective interfaces 460, 470, and 480.

Alternatively, the output devices may be connected to system 400 using the communications channel 451 via the communications interface 450. The display 461 and speakers 471 may be integrated in a single unit with the other components of system 400 in an electronic device such as, for example, a television.

In various exemplary embodiments, the display interface 460 may include a display driver, such as, for example, a timing controller (T Con) chip.

The display 461 and speaker 471 may alternatively be separate from one or more of the other components, for example, if the RF portion of input 490 is part of a separate set-top box. In various exemplary embodiments in which the display 461 and speakers 471 may be external components, the output signal may be provided via dedicated output connections, including, for example, HDMI ports, USB ports, or COMP outputs.

In **Figures 1-15****,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 440 (**Figure 15**) for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 410 or by hardware, or by a combination of hardware and software. As a non-limiting example, the exemplary embodiments may be also implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present disclosure, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present disclosure. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present disclosure. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present disclosure are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present disclosure are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this disclosure, may encompass all or part of the processes performed, for example, on a received video sequence (including possibly a received bitstream which encodes one or more video sequences) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present disclosure.

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present disclosure may encompass all or part of the processes performed, for example, on an input video sequence in order to produce an output bitstream. In various exemplary embodiments, such processes include one or more of the processes typically performed by an encoder. In various exemplary embodiments, such processes also, or alternatively, include processes performed by an encoder of various implementations described in this disclosure.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present disclosure may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this disclosure may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure.

## Claims

1. A method (100) of signaling encapsulated data representing image samples of at least one image, the method comprising:
- writing (110) the image samples as encapsulated data ; and
- writing (120) at least one image horizon data as encapsulated data, each image horizon data being representative of a horizon line of one of the at least one image.

2. A method (200) of displaying at least one image from encapsulated data, the method comprising for each of the at least one image:
- obtaining (220) a horizon line of the at least one image from the encapsulated data;
- rotating (230) the image samples of the at least one image to align the horizon line of the at least one image with a target alignment direction; and
- displaying (240) the rotated image.

3. The method of claim 2, wherein obtaining (220) a horizon line of the at least one image comprises obtaining (222) the horizon line of the at least one image from said encapsulated data or determining (223) the image horizon line of the at least one image.

4. The method of one of claims 1 to 3, wherein the horizon line of the at least one image is determined (223) as being a line that intersects an image view plane and a plane whose normal is a vertical vector on a line passing through Earth's center.

5. The method of one of claims 1 to 3, wherein the horizon line of the at least one image is determined by analyzing visual content of the at least one image.

6. The method of one of claims 1 to 5, wherein the image horizon data and/or the target alignment direction is/are determined from stored predetermined data, from user preferences.

7. The method of claim 1 to 5, wherein the horizon line and/or the target alignment direction may be determined according to user's decisions along the display of the video.

8. The method of one of claims 1 to 7, wherein the image horizon data and/or the target alignment direction is/are determined for each of the at least one video frame or for each group of video frames or for the video.

9. The method of one of claims 2 to 8, wherein the target alignment direction is determined as a line passing through of both user's eyes.

10. The method of one of claims 1 to 9, wherein the image horizon data of one of the at least one image indicates at least one of the following information:
- an angle between the horizon line of said image and a horizontal axis of said image;
- a gravity vector direction;
- a gravity vector magnitude corresponding to a gravity force.

11. A container formatted to include encapsulated data obtained from a method of one of claims 1, 4 to 6.

12. The container of claim 11, wherein the container is a binary file, or a supplemental enhancement information message.

13. The container of claim 11, wherein the container is a ISOBMFF formatted file that conforms to the standard ISO/IEC 14496-12 or one of its derivatives.

14. An apparatus comprises means for performing one of the method claimed in any one of claims 1 to 10.

15. A computer program product including instructions which, when the program is executed by one or more processors, causes the one or more processors to carry out a method claimed in any one of claims 1 to 10.
